# EUROPEAN PATENT APPLICATION

(11) **EP 3 614 452 A1**
(43) Date of publication of application: **26.02.2020**
(21) Application number: 18191530.7
(22) Date of filing: 29.08.2018
(51) Int. Cl.: H01M 2/10, H01M 2/02, H01M 10/647, H01M 10/6555, H01M 10/613

(54) **BATTERY MODULE**

(30) Priority: 23.08.2018 CN 201810968208
(71) Applicant: Contemporary Amperex Technology Co., Limited, Jiaocheng District Ningde City, Fujian 352100 (CN)
(72) Inventor: ZENG, Xin, Ningde City, Fujian 352100 (CN); MOU, Nasi, Ningde City, Fujian 352100 (CN); YU, Kaiqin, Ningde City, Fujian 352100 (CN); CAI, Jinrong, Ningde City, Fujian 352100 (CN); XU, Shoujiang, Ningde City, Fujian 352100 (CN); FENG, Chunyan, Ningde City, Fujian 352100 (CN)
(74) Representative: Prinz & Partner mbB

(57) **Abstract**

The present disclosure relates to a battery module. The battery module includes at least two battery units arranged in a stack. Each of at least two battery units includes: a support; at least one pouch-type battery; and a thermal-dissipation protection case. The thermal-dissipation protection case is connected to the support to form an accommodating space, and the at least one pouch-type battery is accommodated in the accommodating space. At least one of the at least two battery units includes an exposure area exposing the at least one pouch-type battery, and the thermal-dissipation protection case of a battery unit adjacent to the at least one of the at least two battery units is in contact with the at least one pouch-type battery through the exposure area.

## Description

### TECHNICAL FIELD

The present disclosure relates to the field of energy storage devices, and in particular, to a battery module.

### BACKGROUND

During usage of a secondary battery, it is necessary to guarantee good contact of a reaction interface. In this case, it is needed to apply a certain pre-tightening force to guarantee the good contact of the reaction interface. If the contact is not good, it may cause problems such as lithium deposition, which would seriously affect the battery performance. Therefore, a size of the pre-tightening force will affect the chemical reaction in each battery and thus affect the performance of each battery. The inconsistency of the pre-tightening forces would result in inconsistent battery performances, thereby ultimately affecting the overall performance of the battery module.

At present, a conventional pouch-type battery module includes a plurality of battery units, and each battery unit generally includes an upper case, a lower case, and a pouch-type battery accommodated in an accommodating chamber formed by the two cases. The upper case is connected to the lower case by an elastic snap-fit structure, and a pre-tightening force is applied on the pouch-type battery by this connection force. However, due to the manufacturing deviation, positions and shapes of respective elastic snap-fit structures may not be completely identical to each other, which results in poor consistency of pre-tightening forces of pouch-type batteries.

### SUMMARY

The present disclosure provides a battery module, which can improve the consistency of pre-tightening forces on the pouch-type battery in each battery unit.

The present disclosure relates to a battery module. The battery module includes at least two battery units arranged in a stack. Each of at least two battery units includes: a support; at least one pouch-type battery; and a thermal-dissipation protection case. The thermal-dissipation protection case is connected to the support to form an accommodating space, and the at least one pouch-type battery is accommodated in the accommodating space. At least one of the at least two battery units includes an exposure area exposing the at least one pouch-type battery, and the thermal-dissipation protection case of a battery unit adjacent to the at least one of the at least two battery units is in contact with the at least one pouch-type battery through the exposure area.

Further, at least one of the at least two battery units is configured as a single-side battery unit. The single-side battery unit includes: a first support; at least one first pouch-type battery; and a first thermal-dissipation protection case. The first thermal-dissipation protection case is connected to a single side of the first support. The first support includes an exposure area exposing the first pouch-type battery, and a battery unit adjacent to the single-side battery unit is in contact with the first pouch-type battery through the exposure area.

Further, the thermal-dissipation protection case includes a main body and a protruding portion protruding from the main body, and the protruding portion is in contact with the first pouch-type battery of the single-side battery unit.

Further, a contour of the exposure area of the single-side battery unit is matched with a contour of the protruding portion.

Further, the protruding portion is at least partially adhered to the first pouch-type battery being in contact with the protruding portion.

Further, the battery module further includes a dual-side battery unit. The dual-side battery unit includes: a second support; at least one second pouch-type battery; and two second thermal-dissipation protection cases that are separately arranged. Each of the two second thermal-dissipation protection cases clamps the at least one second pouch-type battery from two sides of the second support.

Further, at least one of the two second thermal-dissipation protection cases includes a main body and a protruding portion, and the protruding portion is in contact with the at least one first pouch-type battery through the exposure area.

Further, a plurality of single-side battery units is provided and disposed in a stack, and the dual-side battery unit is disposed at an outermost side of the battery module in a stacking direction.

Further, the first support includes a battery holding slot, the at least one first pouch-type battery is accommodated in the battery holding slot, and a bottom wall of the battery holding slot is provided with a through-hole to form the exposure area.

Further, the first support further includes an expansion slot that is opened to a side of a battery unit adjacent to the single-side battery unit, the expansion slot and the battery holding slot are arranged along a stacking direction of the at least two battery units, the expansion slot communicates with the battery holding slot via the through hole, and the protruding portion of the battery unit adjacent to the single-side battery unit is accommodated in the expansion slot.

The technical solution provided by the present disclosure can achieve the following beneficial effects.

The present disclosure provides a battery module, in which a thermal-dissipation protection case is in contact with a pouch-type battery of an adjacent battery unit. It can be known that when a plurality of battery units is connected to each other and fixed by bolts or other fasteners, the resulting connection force is transmitted to the pouch-type battery through the thermal-dissipation protection case. The connection force acts as a pre-tightening force applied on the pouch-type battery when this force is applied on the pouch-type battery through the thermal-dissipation protection case. The forces applied on the pouch-type batteries by the thermal-dissipation protection cases are relatively consistent under a same connection force, and correspondingly, the pre-tightening force applied on each pouch-type battery of each battery unit is also relatively consistent. This can improve the consistency of the pre-tightening forces on the pouch-type batteries.

It should be understood that the above general description and the following detailed description are merely exemplary and are not intended to limit the present disclosure.

### BRIEF DESCRIPTION OF DRAWINGS

FIG. 1 is an explosion view of a battery module according to an embodiment of the present disclosure;
FIG. 2 is an explosion view of a battery unit according to an embodiment of the present disclosure;
FIG. 3 is a cross-sectional view of a battery module according to an embodiment of the present disclosure;
FIG. 4 is an explosion view of a single-side battery unit according to an embodiment of the present disclosure; and
FIG. 5 is an explosion view of a dual-side battery unit according to an embodiment of the present disclosure.

### Reference signs:

1-battery module;
10-battery unit;
100-support;
102-pouch-type battery;
104-thermal-dissipation protection case;
1040-main body;
1042-protruding portion;
106-exposure area;
108-elastic cushion;
20-single-side battery unit;
200-first support;
2000-exposure area;
2002-battery holding slot;
2004-first positioning support portion;
2006-expansion slot;
2008-first snap-fit protrusion;
202-first pouch-type battery;
204-first thermal-dissipation protection case;
2040-protruding portion;
2042-accommodating groove;
2044-first snap-fit hole;
30-dual-side battery unit;
300-second support;
3000-second snap-fit protrusion;
3002-depression portion;
302-second pouch-type battery;
304-second thermal-dissipation protection case;
3040-protruding portion;
3042-second snap-fit hole;
3044-third snap-fit protrusion;
3046-third snap-fit hole.

The drawings herein are incorporated into and constitute a part of the present specification, which show the embodiments of the present disclosure and illustrate the principles of the present disclosure together with the specification.

### DESCRIPTION OF EMBODIMENTS

The present application will be further described in detail as follows with the specific embodiments and the accompanying drawings.

It should be noted that, the expressions such as "upper", "lower", "left", "right" and the like mentioned in embodiments of the present disclosure are described with reference to the placement status in the accompanying drawings, and should not be construed as limiting embodiments of the present disclosure. In addition, it should also be understood that, in the context, while referring to an element being formed "above" or "below" another element, it is possible that the element is directly formed "above" or "below" the other element, it is also possible that the element is formed "above" or "below" the other element via a middle element.

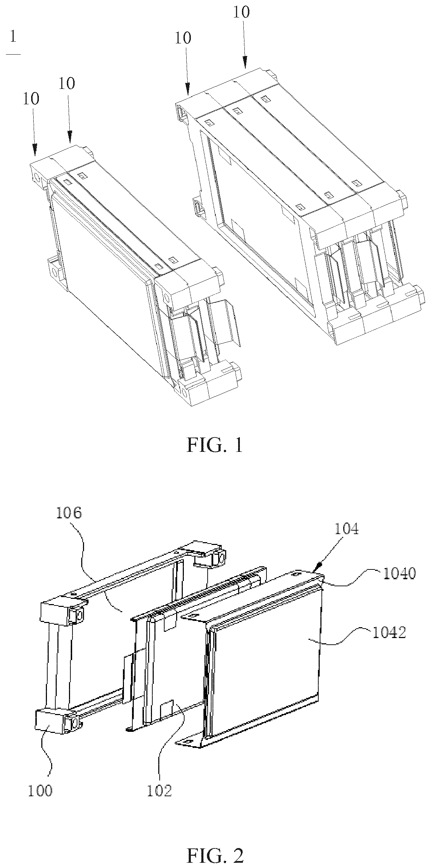

As shown in FIG. 1 and FIG. 2, the present disclosure provides a battery module 1. The battery module 1 includes a plurality of battery units 10, and the plurality of battery units 10 is stacked one by one. Hereinafter, a stacking direction refers to a thickness direction of the battery unit 10.

As shown in FIG. 2, each battery unit 10 includes a support 100, at least one pouch-type battery 102, and a thermal-dissipation protection case 104. The support 100 is connected to the thermal-dissipation protection case 104 to form an accommodating space, and the pouch-type battery 102 is accommodated in the accommodating space. The thermal-dissipation protection case 104 can be a metal case having a high thermal conductivity, such as an aluminum case.

As used herein, the "pouch-type battery" means that an outer package packaging the cell is a laminate including a polymer layer and a metal layer.

At least one battery unit 10 includes an exposure area 106 exposing the pouch-type battery 102. The pouch-type battery 102 is in contact with a thermal-dissipation protection case 104 of an adjacent battery unit 10 via the exposure area 106. It can be known that when the plurality of battery units 10 is connected to each other and fixed by bolts or other fasteners, the resulting connection force is transmitted to the pouch-type battery 102 through the thermal-dissipation protection case 104, and the connection force acts as a pre-tightening force applied on the pouch-type battery 102 when this force is applied on the pouch-type battery 102 through the thermal-dissipation protection case 104. The forces applied on the pouch-type batteries 102 by the thermal-dissipation protection cases 104 are relatively consistent under a same connection force, and correspondingly, the pre-tightening force on each pouch-type battery 102 of each battery unit 10 is also relatively consistent. This can improve the consistency of the pre-tightening forces on the pouch-type batteries 102.

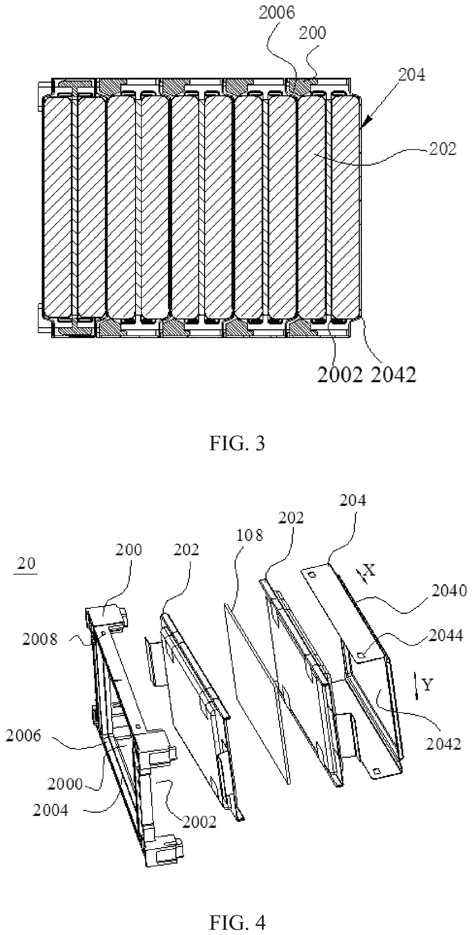

In the present disclosure, in order to expose the pouch-type battery 102 so as to achieve the direct contact between the thermal-dissipation protection case 104 and the pouch-type battery 102, in an embodiment, as shown in FIG. 3, at least one battery unit 10 in the battery module 1 can be set as a single-side battery unit 20.

Specifically, as shown in FIG. 4, the single-side battery unit 20 includes a first support 200, at least one first pouch-type battery 202, and a first thermal-dissipation protection case 204. The first thermal-dissipation protection case 204 is connected to a single side of the first support 200 and holds the first pouch-type battery 202 between the first support 200 and the first thermal-dissipation protection case 204.

There can be one, two or more first pouch-type batteries 202. When there are multiple first pouch-type batteries 202 provided, the multiple first pouch-type batteries 202 are stacked one by one in the thickness direction, and the multiple first pouch-type batteries 202 are all disposed on a single side of the first support 200. That is, all of the multiple first pouch-type batteries 202 are disposed on a same side of the first support 200. The first thermal-dissipation protection case 204 is connected to the first support 200 so as to hold and fix respective first pouch-type batteries 202. In this embodiment, there are two first pouch-type batteries 202.

The first support 200 includes an exposure area 2000 exposing the first pouch-type battery 202. The exposure area 2000 can be formed by opening a through hole in the first support 200. In this embodiment, the first support 200 is configured as a hollow frame structure, and the exposure area 2000 of the single-side battery unit 20 is formed in the hollow position.

It should be understand that a side of the first pouch-type battery 202 in the single-side battery unit 20 away from the first thermal-dissipation protection case 204 is exposed to the outside via the exposure area 2000. Thus, the thermal-dissipation protection case104 of the battery unit 10 adjacent to the single-side battery unit 20 can be in contact with the first pouch-type battery 202 via the exposure area 2000.

According to the above description, the single-side battery unit 20 can not only facilitate other battery units 10 applying the pre-tightening force on the first pouch-type battery 202, but also reduce the number of the first thermal-dissipation protection cases 204 in the battery module 1 since only one first thermal-dissipation protection case 204 is provided in the single-side battery unit 20. In this way, the battery module 1 can reserve more space to accommodate more battery units 10, thereby increasing the energy density of the battery module 1.

Further, with reference to FIG. 2, when the battery units 10 are sequentially stacked, in order to avoid interference with the support 100 so as to achieve the contact between the thermal-dissipation protection case 104 and the pouch-type battery 102 of the adjacent battery unit 10, the thermal-dissipation protection case 104 may include a main body 1040 and a protruding portion 1042 protruding from the main body 1040. The protruding portion 1042 protrudes toward the adjacent battery unit 10, so that it is more convenient for the protruding portion 1042 to contact the first pouch-type battery 202 of the single-side battery unit 20 via the exposure area 2000.

In an embodiment, the contour of the exposure area 2000 is matched with the outer contour of the protruding portion 1042. That is, if the contour of the exposure area 2000 is a square shape, the contour of the protruding portion 1042 can also be a square shape, so that it is convenient to achieve the cooperating between the protruding portion 1042 and the exposure area 2000, thereby facilitating the contact of the protruding portion 1042 with the first pouch-type battery 202. Moreover, the size of the protruding portion 1042 can be increased as much as possible without interference with the contour of the exposure area 2000, so as to increase the contact area between the protruding portion 1042 and the first pouch-type battery 202. Meanwhile, such matching can lead to a compact structure and a higher energy density for the battery module 1. The protruding portion 1042 can also be pre-positioned through the exposure area 2000, thereby achieving the simple and convenient assembly of the battery module 1 and thus improving the assembly efficiency.

On the other hand, the protruding portion 1042 (more precisely, a surface of the protruding portion 1042 protruding toward the first pouch-type battery 202) can be at least partially adhered to the first pouch-type battery 202. Such adherence can improve the contact stability between the two, and also can increase the contact area between the protruding portion 1042 and the first pouch-type battery 202 without damage of the first pouch-type battery 202 due to the concentration of the force on a certain position of the first pouch-type batteries 202.

In this embodiment, the entire outer surface of the protruding portion 1042 is designed as a plat surface, and the flat surface completely adheres to the outer surface of the first pouch-type battery 202.

In the single-side battery unit 20, the first thermal-dissipation protection case 204 includes a protruding portion 2040. An inner wall of the first thermal-dissipation protection case 204 facing toward the protruding portion 2040 has an accommodating groove 2042. The accommodating groove 2042 can be formed by punching simultaneously when processing the protruding portion 2040, but the present disclosure will not be limited thereto.

The first pouch-type battery 202 can be accommodated in the accommodating groove 2042. With the accommodating groove 2042, the internal space enclosed by the first thermal-dissipation protection case 204 and the first support 200 can be increased, so as to accommodate more first pouch-type batteries 202 in the accommodating space.

It should be noted that the contour of the accommodating groove 2042 can be matched with the contour of the first pouch-type battery 202, thereby making full use of the space in the accommodating groove 2042 and making the structure more reasonable.

A small gap can be arranged between a side wall of the accommodating groove 2042 and the first pouch-type battery 202. With this arrangement, the sidewall of the accommodating groove 2042 can limit the position of the first pouch-type battery 202, so as to reduce the displacement of the first pouch-type battery 202 in the accommodating groove 2042 and thus increase the stability of the relative position between the two. For the accommodating groove 2042 and first pouch-type battery 202 having their contours matched, the sidewall of the accommodating groove 2042 can limit the position of the first pouch-type battery 202 along both two directions that are perpendicular to each other.

In this embodiment, the two directions that are perpendicular to each other include a length direction (X direction in FIG. 4) and a width direction (Y direction in FIG. 4) of the contour shape of the first pouch-type battery 202.

The term "small gap" as used herein refers to a basic size and tolerance range selected in accordance with the standard when the first pouch-type battery 202 is mated with the accommodating groove 2042 and the contour of the accommodating groove 2042 is a little bigger than that of the first pouch-type battery 202, and those skilled in the art can make a selection according to actual requirements.

Further, with reference to FIG. 3 and FIG. 4, the first support 200 includes a battery holding slot 2002, and the battery holding slot 2002 is in communication with the accommodating groove 2042 so as to collectively accommodate the first pouch-type battery 202. At this time, the exposure area 2000 can be regarded as a through hole provided in the bottom wall of the battery holding slot 2002.

In this embodiment, since the first support 200 is configured as a hollow frame structure, the battery holding slot 2002 can be formed by providing a first positioning support portion 2004 at the hollow position. Specifically, the first support 200 can further include a first positioning support portion 2004. The first positioning support portion 2004 extends from the inner wall at the hollow position toward the center position and extends for a predetermined distance. Thus, the first positioning support portion 2004 and the frame of the first support 200 together form the battery holding slot 2002. The first positioning support portion 2004 is the bottom wall of the battery holding slot 2002, and the frame forms side walls of the battery holding slot 2002.

On another side of the first positioning support portion 2004, the first positioning support portion 2004 and the frame of the first support 200 further form an expansion slot 2006. In this way, the first positioning support portion 2004 forms the bottom wall of the expansion slot 2006, and the frame forms side walls of the expansion slot 2006. It can be known that the expansion slot 2006 and the battery holding slot 2002 are arranged along the stacking direction of the battery unit 10 and are defined by the first positioning support portion 2004.

The expansion slot 2006 is opened to one side of an adjacent battery unit 10 which is stacked in the latter, and can accommodate at least a portion of a battery unit 10 adjacent to the single-side battery unit 20, such as the protruding portion 1042. That is, the battery module 1 can be provided with a battery unit 10 from a side where the expansion slot 2006 is located, so as to form a battery module with a larger capacity. When the expansion slot 2006 accommodates the protruding portion 1042, the first support 200 forms a stacking arrangement with the thermal-dissipation protection case 104 of the adjacent battery unit 10, thereby improving the overall impact resistance of the battery module 1.

On the other hand, with the expansion slot 2006, it is less likely to cause a large position shift for the adjacent battery unit 10 accommodated in the expansion slot 2006, thereby improving the stability of the assembly position.

In the single-side battery unit 20, the first thermal-dissipation protection case 204 is detachably connected to the first support 200. In an embodiment, the single-side battery unit 20 includes a first snap-fit mechanism. The first support 200 and the first thermal-dissipation protection case 204 are snap-fitted by the first snap-fit mechanism. Specifically, the first support 200 includes a first snap-fit protrusion 2008, the first thermal-dissipation protection case 204 includes a first snap-fit hole 2044, and the snap-fit direction between the first snap-fit protrusion 2008 and the first snap-fit hole 2044 is the same as the stacking direction of the battery unit 10.

In this embodiment, the first snap-fit protrusion 2008 and the first snap-fit hole 2044 together constitute a first snap-fit mechanism, which can be easily assembled and disassembled and can improve the assembly efficiency of the battery unit 10. Of course, the first support 200 and the first thermal-dissipation protection case 204 can also be connected to each other by bolts or the like.

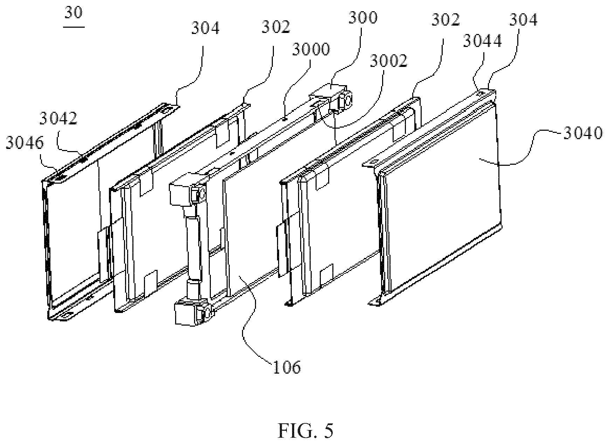

As shown in FIG. 5, some of the battery units 10 can also be configured as one or more dual-side battery units 30. Specifically, the dual-side battery unit 30 includes a second support 300, at least one second pouch-type battery 302, and two second thermal-dissipation protection cases 304 that are separately arranged. The two second thermal-dissipation protection cases 304 package the second pouch-type battery 302 respectively from two sides of the second support 300, and clamp the second pouch-type battery 302 to the second support 300.

Similarly, there can be one, two or more second pouch-type batteries 202. When multiple second pouch-type batteries 202 are provided, the multiple second pouch-type batteries 202 are stacked one by one in the thickness direction, and are disposed on two sides of the first support 200. In this embodiment, two second pouch-type batteries 202 are provided, and the present disclosure will not be limited thereto.

For the two second thermal-dissipation protection cases 304, it is possible that one of them includes a main body and a protruding portion 3040 protruding from the main body, and it is also possible that each of them includes a protruding portion 3040. The protruding portion 3040 can be in direct contact with the first pouch-type battery 202 in the single-side battery unit 20 through the exposure area 2000.

According to the above description, the dual-side battery unit 30 packages the surface of the second pouch-type battery 302 by two second thermal-dissipation protection cases 304 that are arranged separately, thereby reducing the risk of breakage occurring for the second pouch-type battery 302.

In the dual-side battery unit 30, each second thermal-dissipation protection case 304 can be detachably connected to the second support 300. In an embodiment, the dual-side battery unit 30 includes a second snap-fit mechanism. The second support 300 is fixed to each second thermal-dissipation protection case 304 by the second snap-fit mechanism.

Specifically, the second support 300 includes a second snap-fit protrusion 3000, one second thermal-dissipation protection case 304 includes a second snap-fit hole 3042, and the snap-fit direction between the second snap-fit protrusion 3000 and the second snap-fit hole 3042 is the same as the stacking direction of the battery unit 10.

At the same time, two second thermal-dissipation protection cases 304 are also snap-fitted to each other. Here, one of the two second thermal-dissipation protection cases 304 includes a third snap-fit protrusion 3044, and the other one of the two second thermal-dissipation protection cases 304 includes a third snap-fit hole 3046. The snap-fit direction between the third snap-fit protrusion 3044 and the third snap-fit hole 3046 is the same as the stacking direction of the battery unit 10.

In this embodiment, the second snap-fit protrusion 3000, the second snap-fit hole 3042, the third snap-fit protrusion 3044, and the third snap-fit hole 3046 together constitute a second snap-fit mechanism.

Further, in order to achieve snap-fit and detachment of the two second thermal-dissipation protection cases 304, the second support 300 is also provided with a depression portion 3002 for avoiding the second snap-fit mechanism. Specifically, the snap-fit position of the third snap-fit protrusion 3044 and the third snap-fit hole 3046 is located above the second support 300. When the snap-fit or detachment of third snap-fit protrusion 3044 and the third snap-fit hole 3046 occurs, in order to avoid the interference between the third snap-fit protrusion 3044 and the second support 300, the second support 300 is provided with a depression portion 3002. The depression portion 3002 forms an avoiding space, and the third snap-fit protrusion 3044 is accommodated in the depression portion 3002 after snap-fit, thereby providing a space for movement of the third snap-fit protrusion 3044..

In an embodiment, with reference to FIG. 1, the battery module 1 can include multiple single-side battery units 20 and one dual-side battery unit 30. When stacking, the multiple single-side battery units 20 are adjacently disposed, the dual-side battery unit 30 is disposed at the outermost side along the stacking direction, and the single-side battery units 20 and the dual-side battery unit 30 are sequentially stacked on the exposure side of the first pouch-type battery 202. For the battery module 1 with such a configuration, one second thermal-dissipation protection case 304 of the dual-side battery unit 30 facing away from the single-side battery unit 20 can serve as the outermost end plate of the battery module 1, thereby omitting the use of the end plate and thus improving the energy density of the battery module 1. Meanwhile, all the pouch-type batteries 102 are packaged by the thermal-dissipation protection case 104, so that the strength of the battery module 1 can be greatly improved.

It should be noted that for the embodiment in which each of the single-side battery unit 20 and dual-side battery unit 30 includes two pouch-type batteries 102, each pouch-type battery 102 can be cooled by a thermal-dissipation protection case 104, which can not only increase the heat dissipation efficiency but also increase the energy density of the battery module 1.

Each battery unit 10 can further include an elastic cushion 108, and the elastic cushion 108 is disposed between adjacent pouch-type batteries 102. When the pouch-type battery 102 expands, the elastic cushion 108 shrinks and deforms under the action of the expansion force, thereby providing a space for accommodating the expansion of the pouch-type battery 102.

The above-described embodiments are merely preferred embodiments of the present disclosure and are not intended to limit the present disclosure. Those skilled in the art may make various modifications and changes with respect to the present disclosure. Any modifications, equivalent substitutions and improvements made within the principle of the present disclosure shall fall into the protection scope of the present disclosure.

## Claims

1. A battery module (1), **characterized in** comprising at least two battery units (10) arranged in a stack, each of at least two battery units (10) comprising:
a support (100);
at least one pouch-type battery (102); and
a thermal-dissipation protection case (104),
wherein the thermal-dissipation protection case (104) is connected to the support (100) to form an accommodating space, and the at least one pouch-type battery (102) is accommodated in the accommodating space, and
wherein at least one of the at least two battery units (10) comprises an exposure area (106) exposing the at least one pouch-type battery (102), and the thermal-dissipation protection case (104) of a battery unit (10) adjacent to the at least one of the at least two battery units (10) is in contact with the at least one pouch-type battery (102) through the exposure area (106).

2. The battery module (1) according to claim 1, **characterized in that** the at least one of the at least two battery units (10) is configured as a single-side battery unit (20), and the single-side battery unit (20) comprises:
a first support (200);
at least one first pouch-type battery (202); and
a first thermal-dissipation protection case (204),
wherein the first thermal-dissipation protection case (204) is connected to a single side of the first support (200), and
wherein the first support (200) comprises an exposure area (2000) exposing the first pouch-type battery (202), and a battery unit adjacent to the single-side battery unit (20) is in contact with the first pouch-type battery (202) through the exposure area (2000).

3. The battery module (1) according to claim 2, **characterized in that** the thermal-dissipation protection case (104) comprises a main body (1040) and a protruding portion (1042) protruding from the main body (1040), and the protruding portion (1042) is in contact with the first pouch-type battery (202) of the single-side battery unit (20).

4. The battery module (1) according to claim 3, **characterized in that** a contour of the exposure area (2000) of the single-side battery unit (20) is matched with a contour of the protruding portion (1042).

5. The battery module (1) according to claim 3 or 4, **characterized in that** the protruding portion (1042) is at least partially adhered to the first pouch-type battery (202) being in contact with the protruding portion (2040).

6. The battery module (1) according to any of claims 2 to 5, **characterized in that** the battery module (1) further comprises a dual-side battery unit (30), and the dual-side battery unit (30) comprises:
a second support (300);
at least one second pouch-type battery (302); and
two second thermal-dissipation protection cases (304) that are separately arranged,
wherein each of the two second thermal-dissipation protection cases (304) clamps the at least one second pouch-type battery (302) from two sides of the second support (300).

7. The battery module (1) according to claim 6, **characterized in that** at least one of the two second thermal-dissipation protection cases (304) comprises a main body (1040) and a protruding portion (3040), and the protruding portion (3040) is in contact with the at least one first pouch-type battery (202) through the exposure area (2000).

8. The battery module (1) according to claim 6 or 7, **characterized in that** a plurality of single-side battery units (20) is provided and disposed in a stack, and the dual-side battery unit (30) is disposed at an outermost side of the battery module (1) in a stacking direction.

9. The battery module (1) according to any of claims 2 to 8, **characterized in that** the first support (200) comprises a battery holding slot (2002), the at least one first pouch-type battery (202) is accommodated in the battery holding slot (2002), and a bottom wall of the battery holding slot (2002) is provided with a through-hole to form the exposure area (2000).

10. The battery module (1) according to claim 9, **characterized in that** the first support (200) further comprises an expansion slot (2006) that is opened to a side of a battery unit adjacent to the single-side battery unit (20), the expansion slot (2006) and the battery holding slot (2002) are arranged along a stacking direction of the at least two battery units (10), the expansion slot (2006) communicates with the battery holding slot (2002) via the through hole, and the protruding portion (2040) of the battery unit (10) adjacent to the single-side battery unit (20) is accommodated in the expansion slot (2006).
